# FASCICULE DE BREVET EUROPEEN

(11) **EP 3 003 998 B1**
(45) Date de publication et mention de la délivrance du brevet: **07.02.2018**
(21) Numéro de dépôt: 14733268.8
(22) Date de dépôt: 05.06.2014
(51) Int. Cl.: C03B 9/193, C03B 11/10, C03B 11/12

(54) **PROCEDE DE FABRICATION D'UN RECIPIENT EN VERRE PAR PRESSAGE**
VERFAHREN ZUR HERSTELLUNG EINES GLASBEHÄLTERS DURCH PRESSEN
METHOD FOR PRODUCING A GLASS CONTAINER BY PRESSING

(30) Priorité: 06.06.2013 FR 1355239
(43) Date de publication de la demande: 13.04.2016
(73) Titulaire: Pochet du Courval, 75010 Paris (FR)
(72) Inventeur: LEQUIEN, Jany, F-76340 Hodeng au Bosc (FR); FROISSART, Pascal, F-80340 Neuville Coppegueule (FR); BALITEAU, Sébastien, F-80220 Boutencourt (FR)
(74) Mandataire: Derambure Conseil
(86) Numéro de dépôt international: PCT/FR2014/051345
(87) Numéro de publication internationale: WO 2014/195644

(56) Documents cités:
- FR-A- 483 945
- FR-A- 1 344 185
- FR-A1- 2 153 382
- FR-A1- 2 966 453
- US-A- 3 468 648
- US-A1- 2013 081 427

## Description

L'invention concerne le domaine des procédés de fabrication de récipients en verre.

Plus précisément, l'invention concerne le domaine des procédés de fabrication de récipients en verre par pressage.

Pour former un récipient en verre, on a coutume d'utiliser une technique de soufflage, par laquelle la forme du récipient est réalisée en insufflant un gaz chaud à l'intérieur d'une goutte de verre fondu déformable, pour impartir à celle-ci une forme donnée.

Pour diverses raisons, on peut préférer à ce procédé de soufflage un procédé de pressage, par lequel une goutte de verre fondu déformable est prise dans une cavité de moulage, définie par une cuve et un poinçon, et épouse la forme de cette cavité. Le procédé de pressage permet notamment de réaliser des récipients à large ouverture.

Une des difficultés liées au procédé de pressage tient à la difficulté de réaliser des formes intérieures variées pour le récipient. Ces formes intérieures peuvent être utilisées pour la personnalisation du récipient, lui donner une identité forte. Un autre intérêt est de pouvoir générer facilement des récipients présentant le même aspect extérieur, mais différant en volume intérieur. Un autre intérêt peut par exemple également être de générer un récipient dont la forme est optimisée pour ses conditions d'exploitation avec moins de matière, et donc à moindre coût. On peut par exemple générer une forme intérieure dans des endroits où la tenue mécanique du récipient est largement suffisante. Réaliser de telles formes peut être difficile car, du fait que le poinçon doit être sorti de la cuve, on préfère pour le poinçon une forme conique, voire cylindrique, pour éviter tout risque de détérioration du verre lors de la sortie du poinçon.

Un exemple de réalisation permettant de réaliser des formes en relief à l'intérieur d'un flacon est de réaliser des rainures s'étendant selon l'axe d'extraction du poinçon. Dans un tel cas, le matériau de verre en cours de formation n'empêche pas la sortie du poinçon.

Pour former un relief à l'intérieur du récipient par un procédé de moulage, on est obligé de mettre en oeuvre un poinçon comprenant un système mobile, comme proposé par exemple dans FR 2 975 988. Ce poinçon peut prendre deux configurations, une où un dispositif d'impression imprime le relief, mais dans laquelle le poinçon ne peut pas être sorti, et une où le dispositif d'impression est escamoté, ce qui permet de sortir le poinçon.

Bien qu'un tel procédé présente un grand intérêt, notamment pour former des formes intérieures profondes à l'intérieur du flacon, la mise en oeuvre pratique reste limitée du fait des températures extrêmement élevées auxquelles le système est soumis, qui posent des difficultés dans la réalisation d'un système mobile fiable de manière durable dans le temps.

Encore une autre option est d'extraire le poinçon par vissage. De tels vissages sont décrits dans FR 2 153 382. Dans cette réalisation, le poinçon est extrait selon un déplacement en hélice, ce qui permet de former une forme en hélice en relief à l'intérieur du flacon. Une des limites de ce mode de réalisation, est toutefois qu'il ne permet de réaliser que des formes en hélice.

A titre anecdotique, on pourra aussi noter US 4,072,491, qui décrit la réalisation d'une forme « en hélice » par extraction axiale du poinçon. Il s'agit en fait d'une fausse hélice, ne comprenant pas de zones de matériau de verre susceptible d'empêcher l'extraction axiale du poinçon, ce qui n'est possible que du fait de la forme très conique de la paroi interne du flacon. L'hélice est ainsi réalisée dans la paroi conique du récipient, mais la paroi externe du récipient reste rétrécie de manière monotone entre ces deux extrémités.

Le document vise à proposer un procédé de fabrication de récipients en verre par pressage permettant de mettre en oeuvre un grand nombre possible de formes en relief interne, sans recourir à des mécanismes exposés à des températures très élevées.

Ci-après, un exposé de l'invention telle que caractérisée dans les revendications.

Selon un premier aspect, l'invention a pour objet un procédé de fabrication d'un récipient en verre par pressage, comprenant :
a) on fournit une cuve de formage comprenant une surface interne destinée à donner la forme d'une surface externe d'une paroi du récipient,
b) on fournit un poinçon de formage comprenant une surface externe destinée à donner la forme d'une surface interne de la paroi du récipient,
c) on place le poinçon de formage dans la cuve de formage, dans une position de formage, dans laquelle un espace de réception est défini entre la surface interne de la cuve de formage et la surface externe du poinçon de formage, une goutte de verre déformable s'étendant partiellement dans l'espace de réception, le poinçon de formage étant déplaçable par rapport à la cuve de formage selon un déplacement de sortie entre la position de formage et une position sortie, une enveloppe d'encombrement étant définie par le volume cumulé occupé par le poinçon de formage entre ses positions de formage et sortie,
d) tout en maintenant la goutte de verre dans la cuve de formage et le poinçon de formage dans la position de formage, on refroidit la goutte de verre déformée entre un état initial présentant un volume initial et un état ultérieur présentant un volume ultérieur, le volume initial interceptant l'enveloppe d'encombrement, et le volume ultérieur n'interceptant pas l'enveloppe d'encombrement, et au cours du refroidissement, on observe un phénomène de retrait du verre
e) on applique le déplacement de sortie au poinçon de formage.

Grâce à ces dispositions, on contrôle le procédé de moulage de sorte que le retrait du verre permette une extraction du poinçon après un certain refroidissement, alors qu'une telle extraction à chaud perturberait la géométrie intérieure en relief.

Selon une réalisation, lors de l'étape c), on fournit dans la cuve de formage une goutte de verre déformable, on déplace le poinçon de formage selon un déplacement d'entrée depuis une position initiale jusque dans la position de formage, en déformant ainsi la goutte de verre déformable pour faire s'étendre celle-ci partiellement dans l'espace de réception.

Selon une réalisation, la position initiale et la position sortie sont identiques.

Selon une réalisation, les déplacements d'entrée et de sortie suivent des trajectoires opposées.

Selon une réalisation, le déplacement de sortie est un déplacement de pure translation selon un axe de sortie.

Selon une réalisation, la cuve de formage comprend un fond et une ouverture opposée, dans lequel le poinçon de formage s'étend entre une première extrémité et une deuxième extrémité opposée selon l'axe de sortie, la première extrémité étant située plus proche du fond de la cuve de formage que la deuxième extrémité, dans lequel, dans un plan de coupe transversale comprenant l'axe de sortie, la surface externe du poinçon de formage comprend un premier point proche de la première extrémité, et un deuxième point éloigné de la première extrémité, dans lequel une distance du premier point à l'axe de sortie est supérieure à une distance du deuxième point à l'axe de sortie.

Selon une réalisation, la goutte de verre présente, dans son volume initial comme dans son volume ultérieur, une surface interne en regard de la surface externe du poinçon de formage, la surface interne de la goutte de verre présentant un premier point associé au premier point de la surface externe du poinçon de formage, et un deuxième point associé au deuxième point de la surface externe du poinçon de formage, et, dans l'état ultérieur, une distance du deuxième point de la surface interne de la goutte de verre à l'axe de sortie est supérieure à la distance du premier point de la surface externe du poinçon de formage à l'axe de sortie.

Selon une réalisation, le deuxième point de la surface interne de la goutte de verre est le point le plus proche de l'axe de sortie de la surface interne de la goutte de verre dans ledit plan de coupe transversale.

Selon une réalisation, la goutte de verre présente, dans son état initial, une surface interne en regard de la surface externe du poinçon de formage, et une surface externe opposée à la surface interne, la surface externe de la goutte de verre étant en regard de la surface interne de la cuve de formage, à l'étape d), on met en oeuvre un refroidissement de la goutte de verre qui est différentiel entre les surfaces interne et externe de la goutte de verre.

Selon une réalisation, on refroidit plus la surface externe que la surface interne de la goutte de verre.

Selon une réalisation, à l'étape d), on refroidit la goutte de verre de manière contrôlée de manière à retenir la surface externe de la goutte de verre sur la surface interne de la cuve de formage.

Selon une réalisation, à l'étape d), on refroidit la goutte de verre de manière contrôlée de manière à détacher la surface interne de la goutte de verre de la surface externe du poinçon de formage.

Selon une réalisation, à l'étape d), un gaz, en particulier de l'air, s'introduit entre la surface interne de la goutte de verre et la surface externe du poinçon de formage.

Selon une réalisation, à l'étape d), on refroidit la goutte de verre à la fois par l'intermédiaire de la cuve de formage et du poinçon de formage.

Selon une réalisation, f) on met en oeuvre des opérations de finition pour générer un récipient en verre.

Selon une réalisation, après la sortie du poinçon, g) on met en oeuvre une étape de soufflage pour déformer la paroi.

Selon une réalisation, h) on emplit le récipient d'un contenu, et on bouche le récipient de manière amovible à l'aide d'un bouchon coopérant avec le récipient et plaçable alternativement dans un état fermé où il empêche l'accès au contenu et un état ouvert où il autorise cet accès.

Selon une réalisation, le récipient et le bouchon coopérant avec ce dernier forment un article, et i) on met en oeuvre des opérations de finition de l'article.

On décrit maintenant brièvement les figures des dessins.
La figure 1 est un schéma correspondant à une coupe transversale dans un moule pouvant être utilisé dans le cadre de l'invention.
La figure 2 est une vue correspondant à la figure 1 en position de formage du poinçon.
La figure 3 est une vue de détail de la surface externe du poinçon, dans la même coupe transversale que les figures 1 et 2.
La figure 4 est une vue de détail similaire à la figure 3 pour une variante de réalisation.
La figure 5 est une vue correspondant aux figures 1 et 2 en position sortie du poinçon.
La figure 6 est une vue déformée en coupe d'un flacon fabriqué selon un procédé tel que décrit dans la présente demande de brevet.
La figure 7 est une vue de dessus du moule de la figure 1.
La figure 8 est un schéma simplifié d'une étape de soufflage ultérieur.

Ci-après un exposé détaillé de plusieurs modes de réalisation de l'invention assorti d'exemples et de référence aux dessins.

Sur les figures, les mêmes références désignent des éléments identiques ou similaires.

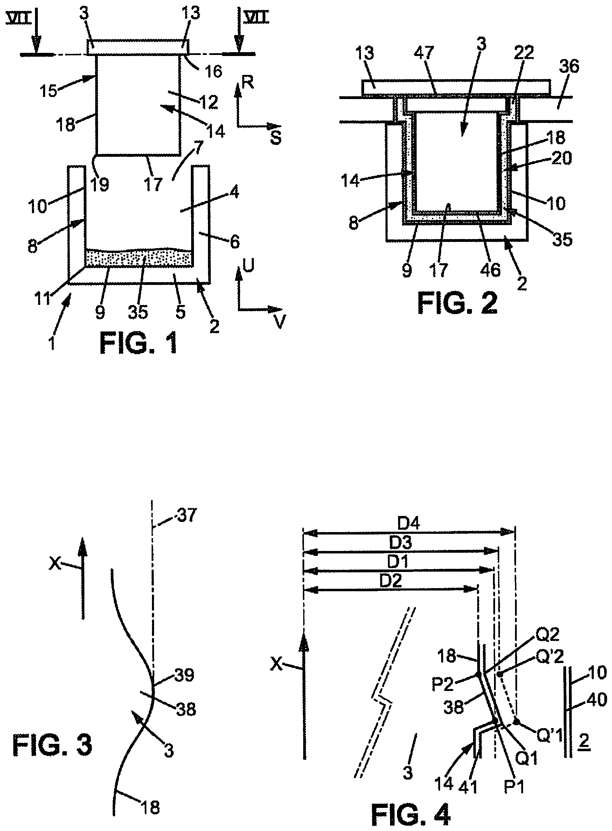

On a représenté sur la figure 1 un moule 1 utilisé pour la fabrication d'un récipient en verre par pressage. Le moule 1 comprend une cuve de formage 2 et un poinçon de formage 3. Le moule 1 définit une cavité 4 (espace de réception) comprise entre la cuve de formage 2 et le poinçon de formage 3.

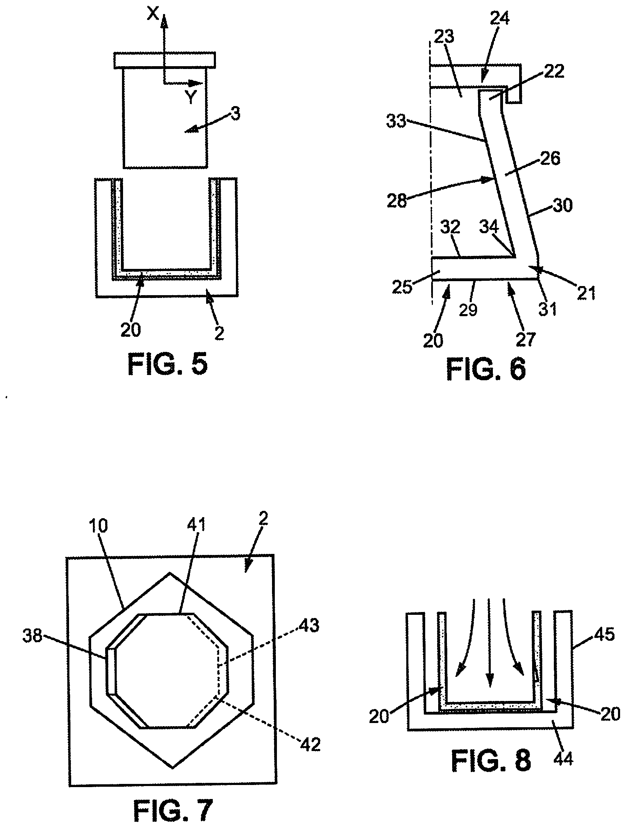

Sur la figure 1, le moule 1 est représenté dans une configuration ouverte. C'est-à-dire que le poinçon de formage se trouve par rapport à la cuve de formage dans une position initiale. Le poinçon de formage 3 et la cuve de formage 2 sont mobiles l'un par rapport à l'autre. Pour fixer les idées, on considérera par la suite que la cuve de formage 2 est fixe, et que le poinçon de formage 3 est mobile par rapport à la cuve de formage 2. Le poinçon de formage 3 est mobile par rapport à la cuve de formage 2, d'une part entre une position initiale, représentée sur la figure 1 et une position de formage, représentée sur la figure 2, et d'autre part entre la position de formage représentée sur la figure 2 et une position sortie, représentée sur la figure 5. Pour fixer les idées, on a représenté le poinçon de formage au-dessus de la cuve de formage, mais en variante, le procédé pourrait être réalisé selon une orientation inverse. C'est-à-dire le moule retourné, disposant d'une ouverture au niveau du fond pour introduire une goutte de verre fondu, et un poinçon de formage disposé en-dessous du moule.

Le cas échéant, la position initiale représentée sur la figure 1 et la position sortie représentée sur la figure 5 sont identiques, de sorte que le déplacement du poinçon de formage 3 peut être répété de manière périodique pour former une pluralité de récipients en verre de manière successive. Entre ses positions initiale, représentée sur la figure 1 et sa position de formage, représentée sur la figure 2, le poinçon de formage 3 est soumis un déplacement d'entrée. Entre ses positions de formage, représentée sur la figure 2 et sa position de sortie, représentée sur la figure 5, le poinçon de formage est soumis un déplacement de sortie. Les trajectoires de ces déplacements peuvent, le cas échéant, être opposées. C'est-à-dire que les positions prises par le poinçon de formage 3 au cours de son déplacement d'entrée et au cours de son déplacement de sortie sont les mêmes, l'ordre dans lequel ces positions sont prises étant opposé.

La cuve de formage 2 se présente sous la forme d'un récipient susceptible de recevoir une goutte de verre fondu. Ainsi, la cuve de formage 2 est susceptible de supporter des températures de l'ordre de 600°C à 1200°C, environ. La cuve de formage 2 peut prendre toute forme appropriée. Dans l'exemple relativement simple présenté, la cuve de formage 2 comprend un fond 5 et une paroi périphérique latérale 6 s'étendant depuis le fond 5. La paroi périphérique latérale présente une ouverture supérieure 7 opposée au fond. La cuve de formage 2 présente une surface interne 8 destinée à donner la forme d'une surface externe d'une paroi du récipient. La surface interne 8 comprend une surface interne de fond 9 et une surface interne de paroi périphérique latérale 10. Dans l'exemple présenté, ces deux surfaces internes sont reliées entre elles par une arête 11. Toutefois, ceci est illustratif uniquement.

La surface interne de fond 9 présente toute forme appropriée. La surface interne de la paroi périphérique latérale 10 présente toute forme appropriée. Par exemple, on prévoit pour la surface interne de paroi périphérique latérale 10 une forme cylindrique le long d'un axe de cuve U. En variante, on pourrait prévoir une surface interne tronconique rétrécie en direction du fond 5. En section transversale à l'axe U, la surface interne de paroi périphérique latérale 10 présente toute forme appropriée. Par exemple, dans l'exemple présenté, purement illustratif, on prévoit une forme hexagonale. Cette section peut être continue le long de l'axe U, constante, ou par exemple homothétique le long de l'axe U par rapport à un point central situé à l'intérieur de la surface interne de paroi périphérique latérale 10.

En variante, la paroi périphérique latérale 10 pourrait présenter une géométrie différente, adaptée pour générer des formes en relief dans la surface externe de la paroi du récipient, par l'utilisation de tiroirs, ou autre.

Le poinçon de formage 3 se présente sous la forme d'une saillie susceptible de conformer une goutte de verre fondu. Ainsi, le poinçon de formage 3 est susceptible de supporter des températures de l'ordre de 1000 °C, environ. Le poinçon de formage 3 peut prendre toute forme appropriée. A l'échelle macroscopique, le poinçon de formage 3 comprend un corps 12 et un couvercle 13. Le poinçon de formage 3 présente une surface externe 14 destinée à donner la forme d'une surface interne d'une paroi du récipient. La surface externe 14 comprend une surface externe de corps 15 et une surface externe de couvercle 16. La surface externe de corps 15 présente elle-même une surface externe de fond 17 et une surface externe de paroi périphérique latérale 18. Dans l'exemple présenté, ces deux surfaces externes sont reliées entre elles par une arête 19. Toutefois, ceci est illustratif uniquement.

La surface externe de fond 17 présente toute forme appropriée. La surface externe de paroi périphérique latérale 18 sera décrite plus en détail ci-après à l'échelle macroscopique, c'est-à-dire vu de loin à l'échelle des dimensions du récipient, sans prendre en compte les formes locales objets de l'invention qui seront décrites plus en détail ci-après. Par exemple, on prévoit, à l'échelle des dimensions du récipient, pour la surface externe de paroi périphérique latérale 18 une forme cylindrique le long d'un axe de poinçon R. En variante, on pourrait prévoir une surface externe tronconique rétrécie en direction de la surface externe de fond 17, par exemple avec un angle de cône de l'ordre de 2° à 10°. En section transversale à l'axe R, la surface externe de paroi périphérique latérale 18 présente toute forme appropriée. Par exemple, dans l'exemple présenté, purement illustratif, on prévoit une forme octogonale. Cette section peut être continue le long de l'axe R, constante, ou par exemple homothétique le long de l'axe R par rapport à un point central situé à l'intérieur de la surface externe de paroi périphérique latérale 18.

Le récipient 20 à former comprend généralement un corps principal 21 et une bague 22. Le corps principal 21 présent une forme creuse destinée à contenir un contenu, notamment liquide ou pâteux, par exemple du type d'un produit cosmétique (parfums, poudre,...). La bague 22 est venue de matière avec le corps principal 21, et définit une ouverture 23 par laquelle peut être introduit ou retiré le contenu, et une interface de fermeture permettant de faire coopérer le récipient 20 avec un couvercle 24. On notera ici que l'invention se rapporte principalement à la fabrication du corps principal 21 du récipient 20. Par conséquent, c'est cette fabrication qui sera décrite plus en détail par la suite. La fabrication de la bague 22 peut être mis en oeuvre selon tous moyens appropriés, et un exemple purement illustratif sera décrite ci-après sont plus de détail.

Comme cela peut être compris de la figure 1, la cuve de formage 2 et le poinçon de formage 3 coopèrent pour redéfinir une cavité 4 de forme définissant la forme du récipient 20. À ce titre, la surface interne 8 de la cuve de formage 2 et la surface externe 14 du poinçon de formage 3 définissent la forme du récipient 20. Dans l'exemple présenté, le récipient 20 comprend un fond 25 et une paroi latérale périphérique 26 raccordée au fond. Le récipient 20 comprend une surface externe 27 et une surface interne opposée 28. Ainsi, la surface externe 27 comprend une surface externe de fond 29 et une surface externe de paroi latérale périphérique 30. Ces deux surfaces externes de fond 29 et de paroi latérale périphérique 30 sont le cas échéant reliées entre elles par une arête 31. La surface interne 28 comprend une surface interne de fond 32 et une surface interne de paroi latérale périphérique 33. Ces deux surfaces internes de fond 32 et de paroi latérale périphérique 33 sont le cas échéant reliées entre elles par une arête 34. Les surfaces externe 29 et interne 32 de fond sont en regard l'une de l'autre et définissent le fond 25, et les surface externe 30 et interne 33 de surface périphérique latérale sont en regard l'une de l'autre et définissent la paroi périphérique latérale 26.

Dans la position de formage, représentée sur la figure deux, le poinçon de formage 3 et la cuve de formage 2 sont associés l'un à l'autre pour définir la forme du récipient 20. En particulier, la surface externe 14 du poinçon de formage 3 est placée en regard et à distance de la surface interne 8 de la cuve de formage 2. Ainsi, la surface externe de fond 17 du poinçon de formage 3 fait face à la surface interne de fond 9 de la cuve de formage 2. La surface externe de paroi périphérique latérale 18 du poinçon de formage 3 fait face à la surface interne de paroi périphérique latérale 10 de la cuve de formage 2. Dans cette position de formage, une goutte de verre fondu déformable 35 est déformée de manière à s'étendre entre le poinçon de formage 3 et la cuve de formage 2. Le matériau à former présente un coefficient de dilatation de l'ordre de 90.10⁻⁷°C⁻¹. La goutte de verre 35 emplit la cavité 4, et épouse les surfaces interne 8 de la cuve de formage 2 et externe 14 du poinçon de formage 3. L'épaisseur entre les surfaces interne 8 et externe 14 est par exemple d'au moins 2 mm, de préférence d'au moins 2,5 mm, selon les dimensions du récipient à former. On notera qu'on peut, le cas échéant, former également la bague 22 du récipient par tous moyens appropriés, par exemple en utilisant une portion de moule 36 dédiée déplaçable par rapport à la cuve de formage 2 selon un axe transversal S, par exemple radial. Le couvercle 13 du poinçon de formage 3 coopère avec la cuve de formage 2 ou la portion de moule 36 pour fermer la cavité 4.

Le poinçon de formage 3 est maintenu en position de formage pendant un certain temps, pendant lequel la température de la goutte de verre 35 déformé diminue. Le temps nécessaire dépend du poids du verre et de la profondeur du motif à former, mais est typiquement de l'ordre de 2 à 30 secondes. Au bout d'un certain temps, on applique au poinçon de formage un déplacement de sortie, pour placer le poinçon de formage 3 dans sa position de sortie représentée sur la figure 5. Pour fixer les idées, pour la suite de la description, on considère un déplacement de sortie qui soit une translation pure du poinçon de formage 3 par rapport à la cuve de formage 2 selon un axe de sortie X. Dans le cas présent, les axes X, R et U sont confondus. Dans la position de formage, le poinçon de formage présente une première extrémité 46 faisant face au fond 5 de la cuve de formage 2, et une deuxième extrémité 47 opposée. Les première et deuxième extrémités 46, 47, sont disposées dans cet ordre selon l'axe de sortie X. Ainsi, après un certain temps en position de formage, le poinçon de formage 3 est soumis un déplacement de sortie depuis sa position de formage jusqu'à la position externe représentée sur la figure 5.

On peut définir une enveloppe d'encombrement 37 du poinçon de formage 3 comme le volume cumulé occupé par le poinçon de formage 3 entre ses positions de formage et externe. C'est-à-dire que, si à un instant quelconque du déplacement du poinçon de formage 3 depuis sa position de formage jusqu'à sa position externe, le poinçon de formage 3 occupe un point de l'espace donné, alors ce point de l'espace fait partie de l'enveloppe d'encombrement. Pour fixer les idées, les explications sont données ci-après en coupe transversale dans le plan contenant l'axe de sortie. Ces explications pourraient s'appliquer dans tout autre plan contenant l'axe de sortie, même si les géométries dans ces différents plans ne sont pas exactement identiques. Comme visible sur la figure 3, la surface externe de paroi latérale périphérique 18 du poinçon de formage 3 comporte une saillie 38. Comme visible sur la figure 3, la saillie 38 comprend un point 39 le plus radialement extérieur par rapport à l'axe X. Ainsi, dans ce plan, l'enveloppe d'encombrement 37 comprend une droite parallèle à l'axe X et passant par ce point le plus radialement extérieur 39.

En se référant à la figure 4, on comprend qu'une saillie 38 comprend un point P1 le plus radialement extérieur par rapport à l'axe X et un point P2, plus éloigné de la surface de fond 17 (ou de la première extrémité 46) du poinçon de formage 3, et plus proche de l'axe X que le point P1. Ainsi une distance D1 du point P1 à l'axe X est supérieure à la distance D2 du point P2 à l'axe X.

Au tout début de l'étape de formage, au moment où le poinçon de formage 3 est situé dans la position de formage, le verre fondu chaud 35 se déforme pour épouser à la fois la surface externe de paroi périphérique latérale 18 du poinçon de formage 3 et la surface interne de paroi périphérique latérale de la cuve de formage 2. Ainsi, à ce moment, une paroi interne du récipient en verre comprend un point Q1 confondu avec le point P1, et un point Q2 confondu avec le point P2. Ainsi, dans cet état initial de la goutte de verre déformée, la goutte déformée présente un volume initial qui intercepte l'enveloppe d'encombrement 37 du poinçon de formage 3. En effet, le point Q2 est situé radialement plus à l'intérieur que le point P1 par rapport à l'axe X. Si on retirait le poinçon de formage 3 dans cet état initial, on entraînerait le verre directement au-dessus de la saillie 38. Ceci détériorait le poinçon de formage 3, et n'aboutirait pas au but recherché de former dans le récipient 20 une forme en relief.

Pendant que le poinçon de formage 3 est maintenu dans sa position de formage, la goutte de verre fondu refroidit, car la cuve de formage 2 et le poinçon de fromage 3 sont de température inférieure à la goutte de verre fondu 35. Au cours de ce refroidissement, on observe un phénomène de retrait du verre. En particulier, on met en oeuvre un refroidissement différentiel des surfaces externe et interne de la goutte de verre. La surface externe 40 de la goutte de verre, destinée à former la surface externe 27 du récipient est disposée en regard de la surface interne 8 de la cuve de formage 2. La surface interne 41 de la goutte de verre, destinée à former la surface interne 28 du récipient est disposée en regard de la surface externe 14 du poinçon de formage. En mettant en oeuvre un refroidissement différentiel de ces deux surfaces, la surface externe 40 de la goutte de verre est retenue sur la surface interne 10 de la cuve de formage 3. La surface interne 41 de la goutte de verre se détache de la surface externe 14 du poinçon de formage 3. Le refroidissement différentiel est obtenu en contrôlant les températures du poinçon de formage 3 et de la cuve de formage 2. La cuve de formage 2 présente une plus grande surface d'échange, avec la goutte de verre fondu, et peut être maintenu avec une surface interne à une température contrôlée autour de 400°C à 600°C. L'extérieur de la cuve de formage 2 est maintenu à une température bien plus basse, par exemple de l'ordre de 100°C à 300°C. Ainsi, un flux de chaleur important s'effectue à travers la cuve de formage 2.

Le poinçon de formage 3, plongé au coeur de la goutte de verre fondu, est maintenu à une température inférieure à la surface interne de la cuve de formage. La surface externe du poinçon de formage est par exemple maintenue entre 300°C et 500°C. La température du poinçon de formage est inférieure à la température de la surface interne de la cuve de formage 2. Au cours de ce détachement, à moins qu'on ne travaille sous atmosphère sous vide, un gaz, tel que de l'air ambiant, peut venir s'intercaler entre la surface interne 41 de la goutte de verre et la surface externe 14 du poinçon de formage 3. Ainsi, dans un état ultérieur de la goutte de verre, obtenu après un certain temps avec le poinçon de formage 3 dans la position de formage, est représenté en pointillés sur la figure 4. Dans cet état ultérieur, la surface extérieure 40 de la goutte de verre peut ne pas avoir changé de position de manière à significative, de sorte que le trait plein représenté dans l'état initial correspond également à la localisation de cette partie dans l'état ultérieur. Au contraire, la position de la paroi intérieure 41 de la goutte de verre dans cet état ultérieur à été changée. Ainsi, par rapport à l'axe X, on peut considérer que le point Q1 s'est déplacé radialement vers l'extérieur en Q'1 et que le point Q2 s'est déplacé vers l'extérieur en un point Q'2. Ce retrait est par exemple de l'ordre de 0,05 mm à 0,5 mm pour les types de récipients considérés ici. Dans cet état ultérieur, la goutte de verre présente un volume ultérieur. Le volume ultérieur n'intercepte pas l'enveloppe d'encombrement 37. En particulier, comme on peut le voir sur la figure 4, la distance D3 du point Q'2 à l'axe X est supérieure à la distance D1 du point P1 à l'axe X. Ainsi, dans cet état ultérieur, il est possible d'appliquer le déplacement de sortie au poinçon de formage 3, sans s'interférer avec la surface intérieure 41 de la goutte de verre, et par conséquent avec la goutte de verre elle-même. Par ailleurs, le phénomène de retrait intervenant pour toute la paroi périphériques latérale 26, la distance D4 du point Q'1 à l'axe X reste supérieure à la distance D3 du point Q'2 à l'axe X. En d'autres termes, on a réalisé dans la surface interne 33 de la paroi périphérique latérale 26 du récipient 20 un évidement, ou une forme en creux, en contre dépouille.

On peut ensuite extraire le récipient 20 de la cuve de formage 2 par tous moyens appropriés.

On n'a pas décrit ici spécifiquement la formation de la bague 22 : celle-ci pourra être mise en oeuvre de toute manière appropriée compatible avec l'invention. Selon un mode de réalisation de l'invention, on dispose alors d'un récipient en verre. On peut appliquer différentes étapes de finition à ce récipient en verre, telles que des revêtements par dépôt, par exemple. Le récipient 20 ainsi formé peut être empli d'un contenu. Un bouchon 24 peut être assemblé au récipient 20 pour former un article prêt être packagé et envoyé ou vendu. Le bouchon 24 coopère avec le récipient 20 de manière amovible, pouvant être placé alternativement dans un état fermé où il empêche l'accès au contenu, ou un état ouvert où il autorise cet accès. Le bouchon 24 est retenu sur le récipient verre par vissage, pression, ou autre.

Le mode de réalisation qui est décrit ci-dessus fait référence à un déplacement de sortie qui est une translation pure du poinçon de formage 3 selon un axe X. Toutefois, l'invention n'est pas limitée à ce type de mouvement particulier. Ce mouvement particulier a été utilisé pour décrire l'invention, pour faciliter sa compréhension. D'autres types de mouvements de sortie du poinçon de formage sont envisageables, à partir du moment où le volume initial intercepte l'enveloppe d'encombrement, et le volume ultérieur n'intercepte pas l'enveloppe d'encombrement. On remarquera ainsi que, pour un déplacement de sortie par un vissage, tel qu'il est par exemple décrit dans l'art antérieur cité plus haut, l'enveloppe d'encombrement du poinçon de formage correspond exactement à la forme de vis du poinçon de formage dans sa position de formage. Ainsi, pour ce genre de procédés antérieurs, le volume initial n'intercepte pas l'enveloppe d'encombrement.

L'invention a également été décrite ci-dessus en faisant référence à la formation d'une saillie 38 relativement localisée sur la surface externe 14 du poinçon de formage 3. Toutefois, une telle saillie n'est pas nécessairement localisée. Ainsi, la figure 6 représente un exemple de réalisation d'un flacon, où la forme de la surface interne de paroi périphérique latérale 33 est continûment élargie à mesure qu'on se rapproche du fond 25 du récipient 20. On notera toutefois que le mode de réalisation de la figure 6 n'est pas nécessairement à l'échelle, et que l'élargissement en direction du fond peut avoir été grossi pour améliorer la compréhension de l'invention.

L'invention ci-dessus a été décrite dans un plan de couple particulier du poinçon de formage 3. On pourrait utiliser un poinçon de formage 3 qui soit profilé sur sa périphérie, de sorte que toute coupe transversale comprenant l'axe R présente la même forme que celle qui vient d'être décrite. En variante, on pourra mettre en oeuvre l'invention pour réaliser des formes plus complexes à l'intérieur du récipient 20. Un exemple purement illustratif est représenté sur la figure 7, où on a représenté d'une part la paroi périphérique supérieure 41 et la paroi périphérique inférieure 42 du poinçon de formage 3. De manière purement illustrative, on pourra donc noter du côté gauche de la figure 7 une saillie 38 du poinçon de formage 3, et sur la droite une forme non cylindrique en creux 43 du poinçon de formage. Cet exemple est purement illustratif.

Le récipient qui vient d'être fabriqué, issu du procédé de pressage décrit ci-dessus, peut être utilisé tel quel, sous réserve de quelques étapes de finition. Il s'agit dans ce cas d'un procédé de pressage seul.

En variante, on pourra mettre en oeuvre un procédé dit pressé/soufflé dans lequel le procédé décrit ci-dessus correspond à l'étape de pressage du procédé pressé/soufflé. Dans ce cas, le récipient issu du procédé de pressage qui vient d'être décrit est ensuite soumis à un procédé de soufflage. Au cours de ce procédé de soufflage, on place le récipient 20 dans une cuve de soufflage 44. La cuve de soufflage 44 comprend une surface intérieure 45 présentant toute géométrie appropriée. Le récipient 20 est soumis à un flux d'air qui déplace radialement ses parois pour les plaquer sur la surface intérieure 45 de la cuve de soufflage 44, de sorte que le récipient 20 prenne la forme impartie par cette surface. Cette étape est décrite schématiquement sur la figure 8. À noter qu'au cours de ce procédé de soufflage, la forme générale creuse générée dans la surface interne du récipient 20 va rester une forme creuse.

## Revendications

1. Procédé de fabrication d'un récipient en verre par pressage, comprenant :
a) on fournit une cuve de formage (2) comprenant une surface interne (8) destinée à donner la forme d'une surface externe (27) d'une paroi du récipient,
b) on fournit un poinçon de formage (3) comprenant une surface externe (14) destinée à donner la forme d'une surface interne (28) de la paroi du récipient,
c) on place le poinçon de formage (3) dans la cuve de formage (2), dans une position de formage, dans laquelle un espace de réception (4) est défini entre la surface interne (8) de la cuve de formage (2) et la surface externe (28) du poinçon de formage (3), une goutte de verre (35) déformable s'étendant partiellement dans l'espace de réception (4), le poinçon de formage (3) étant déplaçable par rapport à la cuve de formage (2) selon un déplacement de sortie entre la position de formage et une position sortie, une enveloppe d'encombrement (37) étant définie par le volume cumulé occupé par le poinçon de formage (3) entre ses positions de formage et sortie,
d) tout en maintenant la goutte de verre (35) dans la cuve de formage (2) et le poinçon de formage (3) dans la position de formage, on refroidit la goutte de verre (35) déformée entre un état initial présentant un volume initial et un état ultérieur présentant un volume ultérieur, le volume initial interceptant l'enveloppe d'encombrement (37), et le volume ultérieur n'interceptant pas l'enveloppe d'encombrement (37), et au cours du refroidissement, on observe un phénomène de retrait du verre,
e) on applique le déplacement de sortie au poinçon de formage (3).

2. Procédé selon la revendication 1, dans lequel, lors de l'étape c), on fournit dans la cuve de formage (2) une goutte de verre déformable (35), on déplace le poinçon de formage (3) selon un déplacement d'entrée depuis une position initiale jusque dans la position de formage, en déformant ainsi la goutte de verre (35) déformable pour faire s'étendre celle-ci partiellement dans l'espace de réception (4).

3. Procédé selon la revendication 2, comprenant en outre l'une et/ou l'autre des caractéristiques suivantes :
- la position initiale et la position sortie sont identiques ;
- les déplacements d'entrée et de sortie suivent des trajectoires opposées.

4. Procédé selon l'une des revendications 1 à 3, dans lequel le déplacement de sortie est un déplacement de pure translation selon un axe de sortie (X).

5. Procédé selon la revendication 4, dans lequel la cuve de formage (2) comprend un fond (5) et une ouverture (7) opposée, dans lequel le poinçon de formage (3) s'étend entre une première extrémité (46) et une deuxième extrémité (47) opposée selon l'axe de sortie (X), la première extrémité (46) étant située plus proche du fond (5) de la cuve de formage (2) que la deuxième extrémité (47), dans lequel, dans un plan de coupe transversale comprenant l'axe de sortie (X), la surface externe (14) du poinçon de formage (3) comprend un premier point (P1) proche de la première extrémité (46), et un deuxième point (P2) éloigné de la première extrémité (46), dans lequel une distance (D1) du premier point (P1) à l'axe de sortie (X) est supérieure à une distance (D2) du deuxième point (P2) à l'axe de sortie (X).

6. Procédé selon la revendication 5, dans lequel la goutte de verre (35) présente, dans son volume initial comme dans son volume ultérieur, une surface interne (41) en regard de la surface externe (14) du poinçon de formage (3), la surface interne (41) de la goutte de verre (35) présentant un premier point (Q1) associé au premier point (P1) de la surface externe (14) du poinçon de formage (3), et un deuxième point (Q2) associé au deuxième point (P2) de la surface externe (14) du poinçon de formage (3), et dans lequel, dans l'état ultérieur, une distance (D3) du deuxième point (Q2') de la surface interne (41) de la goutte de verre (35) à l'axe de sortie (X) est supérieure à la distance (D1) du premier point (P1) de la surface externe (14) du poinçon de formage(3) à l'axe de sortie (X).

7. Procédé selon la revendication 6 dans lequel le deuxième point (Q2) de la surface interne (41) de la goutte de verre (35) est le point le plus proche de l'axe de sortie (X) de la surface interne (41) de la goutte de verre (35) dans ledit plan de coupe transversale.

8. Procédé selon l'une quelconque des revendications 1 à 7, dans lequel la goutte de verre (35) présente, dans son état initial, une surface interne (41) en regard de la surface externe (14) du poinçon de formage (3), et une surface externe (40) opposée à la surface interne (41), la surface externe (40) de la goutte de verre (35) étant en regard de la surface interne (8) de la cuve de formage (2), dans lequel, à l'étape d), on met en oeuvre un refroidissement de la goutte de verre (35) qui est différentiel entre les surfaces interne (41) et externe (40) de la goutte de verre (35).

9. Procédé selon la revendication 8, comprenant en outre l'une et/ou l'autre des caractéristiques suivantes :
- on refroidit plus la surface externe (40) que la surface interne (41) de la goutte de verre (35) ;
- à l'étape d), on refroidit la goutte de verre (35) de manière contrôlée de manière à retenir la surface externe (40) de la goutte de verre (35) sur la surface interne (8) de la cuve de formage (2).

10. Procédé selon l'une des revendications 8 à 9, dans lequel à l'étape d), on refroidit la goutte de verre (35) de manière contrôlée de manière à détacher la surface interne (41) de la goutte de verre (35) de la surface externe (14) du poinçon de formage (3).

11. Procédé selon la revendication 10, dans lequel à l'étape d), un gaz, en particulier de l'air, s'introduit entre la surface interne (41) de la goutte de verre (35) et la surface externe (14) du poinçon de formage (3).

12. Procédé selon l'une des revendications 8 à 11, dans lequel à l'étape d), on refroidit la goutte de verre (35) à la fois par l'intermédiaire de la cuve de formage (2) et du poinçon de formage (3).

13. Procédé selon l'une des revendications 1 à 12, dans lequel f) on met en oeuvre des opérations de finition pour générer un récipient en verre (20).

14. Procédé selon l'une des revendications 1 à 13, dans lequel, après la sortie du poinçon, g) on met en oeuvre une étape de soufflage pour déformer la paroi.

15. Procédé selon l'une des revendications 1 à 14, dans lequel h) on emplit le récipient (20) d'un contenu, et on bouche le récipient (20) de manière amovible à l'aide d'un bouchon (24) coopérant avec le récipient (20) et plaçable alternativement dans un état fermé où il empêche l'accès au contenu et un état ouvert où il autorise cet accès ;
et notamment dans lequel le récipient (20) et le bouchon (24) coopérant avec ce dernier forment un article, et dans lequel i) on met en oeuvre des opérations de finition de l'article.

## Patentansprüche

1. Verfahren zur Herstellung eines Glasbehälters durch Pressen, Folgendes umfassend:
a) es wird ein Formgefäß (2) bereitgestellt, das eine Innenfläche (8) umfasst, die dazu bestimmt ist, einer Außenfläche (27) einer Wand des Behälters die Form zu geben,
b) es wird ein Formstempel (3) bereitgestellt, der eine Außenfläche (14) umfasst, die dazu bestimmt ist, einer Innenfläche (28) der Wand des Behälters die Form zu geben,
c) der Formstempel (3) wird in dem Formgefäß (2) in einer Formposition platziert, in der ein Aufnahmeraum (4) zwischen der Innenfläche (8) des Formgefäßes (2) und der Außenfläche (28) des Formstempels (3) definiert wird, wobei sich ein verformbarer Glastropfen (35) teilweise in dem Aufnahmeraum (4) erstreckt, wobei der Formstempel (3) in Bezug auf das Formgefäß (2) entlang einer Ausfahrbewegung zwischen der Formposition und einer Ausfahrposition bewegbar ist, wobei durch den Gesamtraum, den der Formstempel (3) zwischen seiner Form- und Ausfahrposition einnimmt, eine Hüllkurve (37) definiert wird,
d) während der Glastropfen (35) im Formgefäß (2) und der Formstempel (3) in der Formposition gehalten werden, wird der verformte Glastropfen (35) zwischen einem Ausgangszustand, in dem er ein Ausgangsvolumen aufweist, und einem späteren Zustand, in dem er ein späteres Volumen aufweist, abgekühlt, wobei das Ausgangsvolumen die Hüllkurve (37) schneidet und das spätere Volumen die Hüllkurve (37) nicht schneidet, und wird im Laufe des Abkühlens ein Schwindungsvorgang des Glases beobachtet,
e) auf den Formstempel wird die Ausfahrbewegung (3) angewandt.

2. Verfahren nach Anspruch 1, wobei in Schritt c) ein verformbarer Glastropfen (35) in das Formgefäß (2) gegeben wird und der Formstempel (3) entlang einer Einführbewegung ausgehend von einer Ausgangsposition bis in die Formposition bewegt wird, wodurch der verformbare Glastropfen (35) verformt wird, so dass er sich teilweise in den Aufnahmeraum (4) erstreckt.

3. Verfahren nach Anspruch 2, das darüber hinaus das eine und/oder andere der folgenden Merkmale umfasst:
- die Ausgangsposition und die Ausfahrposition sind identisch;
- die Einfahr- und Ausfahrbewegungen folgen entgegengesetzten Bahnen.

4. Verfahren nach einem der Ansprüche 1 bis 3, wobei die Ausfahrbewegung eine rein translatorische Bewegung entlang einer Ausfahrachse (X) ist.

5. Verfahren nach Anspruch 4, wobei das Formgefäß (2) einen Boden (5) und eine entgegengesetzte Öffnung (7) umfasst, in der sich der Formstempel (3) zwischen einem ersten Ende (46) und einem zweiten entgegengesetzten Ende (47) entlang der Ausfahrachse (X) erstreckt, wobei das erste Ende (46) dem Boden (5) des Formgefäßes (2) näher als das zweite Ende (47) ist, wobei in einer Querschnittsebene, die die Ausfahrachse (X) umfasst, die Außenfläche (14) des Formstempels (3) einen ersten Punkt (P1), der dem ersten Ende (46) nahe ist, und einen zweiten Punkt (P2), der vom ersten Ende (46) entfernt ist, umfasst, wobei ein Abstand (D1) vom ersten Punkt (P1) bis zur Ausfahrachse (X) größer ist als ein Abstand (D2) vom zweiten Punkt (P2) bis zur Ausfahrachse (X).

6. Verfahren nach Anspruch 5, wobei der Glastropfen (35) in seinem Ausgangsvolumen wie in seinem späteren Volumen eine Innenfläche (41) gegenüber der Außenfläche (14) des Formstempels (3) aufweist, wobei die Innenfläche (41) des Glastropfens (35) einen ersten Punkt (Q1), der dem ersten Punkt (P1) der Außenfläche (14) des Formstempels (3) zugeordnet ist, und einen zweiten Punkt (Q2), der dem zweiten Punkt (P2) der Außenfläche (14) des Formstempels (3) zugeordnet ist, aufweist, und bei dem in dem späteren Zustand ein Abstand (D3) vom zweiten Punkt (Q2') der Innenfläche (41) des Glastropfens (35) bis zur Ausfahrachse (X) größer ist als der Abstand (D1) vom ersten Punkt (P1) der Außenfläche (14) des Formstempels (3) bis zur Ausfahrachse (X).

7. Verfahren nach Anspruch 6, wobei der zweite Punkt (Q2) der Innenfläche (41) des Glastropfens (35) der der Ausfahrachse (X) nächstgelegene Punkt der Innenfläche (41) des Glastropfens (35) in der Querschnittsebene ist.

8. Verfahren nach einem der Ansprüche 1 bis 7, wobei der Glastropfen (35) in seinem Ausgangszustand eine Innenfläche (41) gegenüber der Außenfläche (14) des Formstempels (3) und eine zur Innenfläche (41) entgegengesetzte Außenfläche (40) aufweist, wobei die Außenfläche (40) des Glastropfens (35) der Innenfläche (8) des Formgefäßes (2) gegenüberliegt, wobei in Schritt d) eine Abkühlung des Glastropfens (35) durchgeführt wird, die zwischen der Innenfläche (41) und der Außenfläche (40) des Glastropfens (35) differentiell ist.

9. Verfahren nach Anspruch 8, das darüber hinaus das eine und/oder andere der folgenden Merkmale umfasst:
- die Außenfläche (40) wird stärker abgekühlt als die Innenfläche (41) des Glastropfens (35);
- in Schritt d) wird der Glastropfen (35) kontrolliert abgekühlt, so dass die Außenfläche (40) des Glastropfens (35) an der Innenfläche (8) des Formgefäßes (2) gehalten wird.

10. Verfahren nach einem der Ansprüche 8 bis 9, wobei in Schritt d) der Glastropfen (35) kontrolliert abgekühlt wird, so dass sich die Innenfläche (41) des Glastropfens (35) von der Außenfläche (14) des Formstempels (3) löst.

11. Verfahren nach Anspruch 10, wobei in Schritt d) ein Gas, insbesondere Luft, zwischen der Innenfläche (41) des Glastropfens (35) und der Außenfläche (14) des Formstempels (3) eingeführt wird.

12. Verfahren nach einem der Ansprüche 8 bis 11, wobei in Schritt d) der Glastropfen (35) sowohl durch das Formgefäß (2) als auch durch den Formstempel (3) abgekühlt wird.

13. Verfahren nach einem der Ansprüche 1 bis 12, wobei f) Endbearbeitungsschritte zur Erzeugung eines Glasbehälters (20) durchgeführt werden.

14. Verfahren nach einem der Ansprüche 1 bis 13, wobei nach dem Ausfahren des Stempels g) ein Schritt des Blasens zum Verformen der Wand durchgeführt wird.

15. Verfahren nach einem der Ansprüche 1 bis 14, wobei h) der Behälter (20) mit einem Inhalt gefüllt wird und der Behälter (20) lösbar mit einem Verschluss (24) verschlossen wird, der mit dem Behälter (20) zusammenwirkt und abwechselnd in einen geschlossenen Zustand, in dem er den Zugang zum Inhalt verhindert, und einen geöffneten Zustand, in dem er diesen Zugang zulässt, versetzt werden kann;
und wobei im Besonderen der Behälter (20) und der mit diesem zusammenwirkende Verschluss (24) einen Artikel bilden und wobei i) Schritte zur Endbearbeitung des Artikels durchgeführt werden.

## Claims

1. Method for producing a glass container by pressing, comprising:
a) providing a die (2) having an internal surface (8) which is intended to shape the outer surface (27) of a wall of the container,
b) providing a punch (3) comprising an external surface (14) which is intended to shape an internal surface (28) of the wall of the container,
c) placing the punch (3) within the die (2) in a forming position in which a receiving space (4) is defined between the inner surface (8) of the die (2) and the outer surface (28) of the punch (3), a deformable gob of glass (35) extending partly within the receiving space (4), the punch (3) being capable of being moved with respect to the die (2) in a withdrawing movement between the forming position and a withdrawn position, a volume envelope (37) being defined by the cumulative volume occupied by the punch (3) between its forming and withdrawn positions,
d) while keeping the gob of glass (35) within the die (2) and the punch (3) in the forming position, the gob of glass (35) which is deformed between an initial state having an initial volume and a subsequent state having a subsequent volume is cooled, the initial volume intercepting the clearance envelope (37), and the subsequent volume not intercepting the clearance envelope (37), and during the cooling, shrinkage of the glass takes place,
e) extracting the punch (3).

2. Method according to claim 1, in which during stage c) the deformable gob of glass (35) is inserted into the die (2), the punch (3) is moved from an initial position to the forming position, thus forming the deformable gob of glass (35) to partly expand the same within the receiving space (4).

3. Method according to claim 2, further comprising one and/or more of the following features:
- the initial position and the withdrawn position are the same;
- the inward and withdrawal movements follow opposite trajectories.

4. Method according to any one of claims 1 to 3, in which the withdrawal movement is a movement of pure translation along a withdrawal axis (X).

5. Method according to claim 4 in which the die (2) comprises a base (5) and an opposite opening (7), in which the punch (3) extends between a first extremity (46) and a second opposite extremity (47) along withdrawal axis (X), the first extremity (46) being located closer to the base (5) of the die (2) than the second extremity (47), in which in a transverse cross-sectional plane comprising the withdrawal axis (X) the outer surface (14) of the punch (3) comprises a first point (P1) close to the first extremity (46) and a second point (P2) at a distance from the first extremity (46), in which a distance (D1) from the first point (P1) to the withdrawal axis (X) is greater than a distance (D2) from the second point (P2) to the withdrawal axis (X).

6. Method according to claim 5 in which the gob of glass (35) has in both its initial volume and its subsequent volume an inner surface (41) opposite the outer surface (14) of the punch (3), the inner surface (41) of the gob of glass (35) having a first point (Q1) associated with the first point (P1) on the outer surface (14) of the punch (3) and a second point (Q2) associated with a second point (P2) on the outer surface (14) of the punch (3) and in which in the subsequent condition a distance (D3) from the second point (Q2') on the inner surface (41) of the gob of glass (35) to the withdrawal axis (X) is greater than the distance (D1) from the first point (P1) on the outer surface (14) of the punch (3) to the withdrawal axis (X).

7. Method according to claim 6 in which the second point (Q2) on the inner surface (41) of the gob of glass (35) is the closest point on the inner surface (41) of the gob of glass (35) in the said transverse cross-sectional plane to the withdrawal axis (X).

8. Method according to any one of claims 1 to 7, in which in its initial state the gob of glass (35) has an inner surface (41) facing the outer surface (14) of the punch (3) and an outer surface (40) opposite to the inner surface (41), the outer surface (40) of the gob of glass (35) facing the inner surface (8) of the die (2), in which in stage d) the gob of glass (35) is subjected to cooling which is differential between the inner surface (41) and outer surface (40) of the gob of glass (35).

9. Method according to claim 8, further comprising one and/or more of the following features:
- the outer surface (40) of the gob of glass (35) is cooled more than the inner surface (41);
- in stage d) the gob of glass (35) is cooled in a controlled way so as to hold the outer surface (40) of the gob of glass (35) against the inner surface (8) of the die (2).

10. Method according to any one of claims 8 to 9, in which in stage d) the gob of glass (35) is cooled in a controlled way so as to detach the inner surface (41) of the gob of glass (35) from the outer surface (14) of the punch (3).

11. Method according to claim 10, in which in stage d) a gas, in particular air, is introduced between the inner surface (41) of the gob of glass (35) and the outer surface (14) of the punch (3).

12. Method according to any one of claims 8 to 11, in which in stage d) the gob of glass (35) is cooled by both the die (2) and the punch (3).

13. Method according to any one of claims 1 to 12, in which f) finishing operations are applied to produce a glass container (20).

14. Method according to any one of claims 1 to 13, in which after withdrawal of the punch, g), a step of blowing is applied to deform the wall.

15. Method according to any of claims 1 to 154, in which h) the container (20) is filled with contents and the container (20) is removably closed using a closure (24) acting together with the container (20) which can be alternately placed in a closed condition in which it prevents access to the contents and an open condition in which it permits such access;
and notably in which the container (20) and the closure (24) acting together with the latter form an article, and in which i) finishing operations are applied to the article.
